# EUROPEAN PATENT APPLICATION

(11) **EP 4 276 413 A1**
(43) Date of publication of application: **15.11.2023**
(21) Application number: 23168933.2
(22) Date of filing: 20.04.2023
(51) Int. Cl.: G01C 21/00, G01C 21/20

(54) **MAP GENERATION SYSTEM AND METHOD**

(30) Priority: 11.05.2022 GB 202206880
(71) Applicant: Sony Interactive Entertainment Inc., Tokyo 108-0075 (JP)
(72) Inventor: WALKER, Andrew, London, W1F 7LP (GB); CLARKE, Jake, London, W1F 7LP (GB)
(74) Representative: D Young & Co LLP

(57) **Abstract**

A system for generating and managing maps of a plurality of real-world environments, the system comprising a map generation unit operable to generate a map of each of the plurality of real-world environments, a wireless signal identification unit operable to identify one or more wireless signals at one or more locations in each of the plurality of real-world environments, and to associate the identified signal information with a map corresponding to the same real-world environment, and a compiling unit operable to compile the respective generated maps into a composite map, wherein the respective generated maps are arranged in dependence upon the wireless signals identified in each of the corresponding real-world environments.

## Description

### BACKGROUND OF THE INVENTION

### Field of the invention

This disclosure relates to a map generation system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Maps of real-world environments have become increasingly desirable over the years when seeking to provide information or entertainment to users of processing devices, such as mobile phones or games consoles. This may be motivated by the increase in the processing power and functionality of portable devices, for instance, as this enables the provision of a greater range of user experiences in a greater number of real-world environments - this can include augmented reality applications, for instance, or location-based games that encourage a user to explore environments. In addition to this, there has been an increasing interest in providing augmented reality (AR) and virtual reality (VR) experiences to users, each of which can benefit from an improved availability of mapping information for a real-world environment.

Numerous approaches to the generation of map information have been proposed over the years, based upon using sensors to detect information about the real-world environment and using this information to derive the location of features in the environment. For instance, camera-based methods can capture images of the environment and image analysis can be performed to determine the location of features within the environment. The location of features within the environment can then be used to generate a map of that environment. An example of such a process is the use of SLAM (Simultaneous Localisation And Mapping) techniques, which enable the determination of the position of a device in the environment whilst also mapping that environment using that device.

However, mapping techniques can be computationally expensive. This can place a burden upon a mapping device in terms of power consumption and minimum requirements for processing power to perform the mapping in a timely manner, as well as requiring the device to comprise one or more sensors for capturing information about the environment. This can further increase power consumption, as well as increasing the complexity and cost of such devices. It is therefore considered that there is scope for improving the manner in which mapping information is obtained by a device.

It is in the context of the above discussion that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates
Figure 2 schematically illustrates an example of a set of detected feature points for an environment;
Figures 3A and 3B schematically illustrate images captured from the two viewpoints of Figure 2;
Figure 4 is a schematic flowchart giving an overview of a tracking and mapping process;
Figure 5 is a schematic flowchart of a camera pose calculation process;
Figure 6 is a schematic flowchart of an initialisation technique;
Figure 7 schematically illustrates a method for generating and managing maps of a plurality of real-world environments;
Figure 8 schematically illustrates a method by which a wireless network is operable to distribute one or more maps;
Figure 9 schematically illustrates a method by which a user device is operable to obtain one or more maps associated with a particular wireless signal;
Figure 10 schematically illustrates a method by which a user or device can be instructed to cause the user device to be moved; and
Figure 11 schematically illustrates a system for performing a map generation process and using the generated maps.

### DESCRIPTION OF THE EMBODIMENTS

Referring now to the drawings, wherein like reference numerals designate identical or corresponding parts throughout the several views, embodiments of the present disclosure are described.

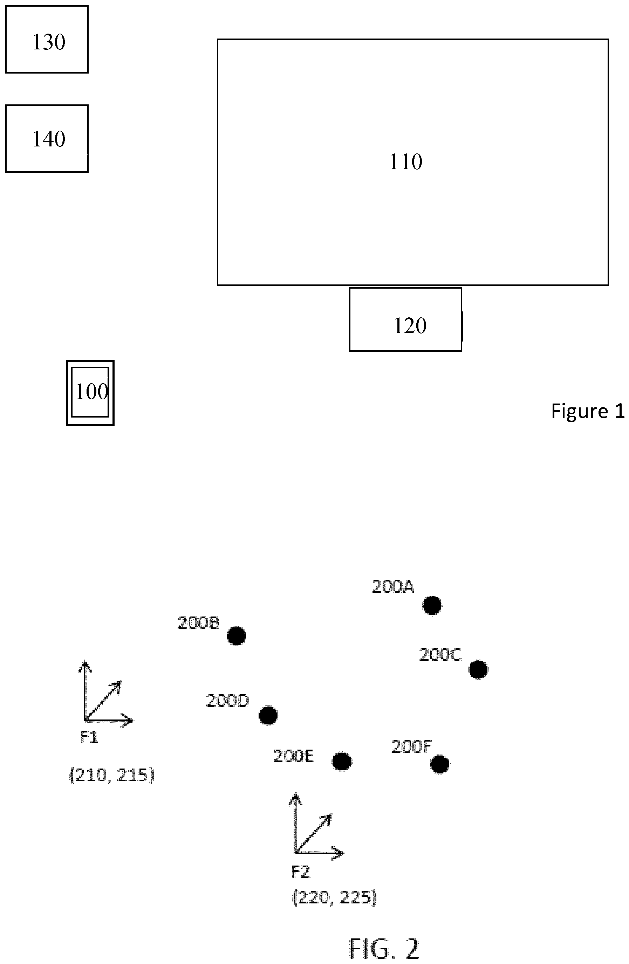

Figure 1 schematically illustrates objects within a real-world environment, such as a user's living room. A user device 100 is present, such as a mobile phone, portable games console, or HMD; this may be any device that is operable to perform a processing function and receive one or more wireless signals. The environment also includes a home entertainment system comprising a display 110, such as a television, and a games console 120. Each or either of these may be operable to communicate with one or more other devices, such as the user device 100, through a wireless connection such as Bluetooth^{®} or Wi-Fi^{®}.

The environment also includes a wireless router 130 which acts as an access point for a Wi-Fi^{®} network. The user device may be able to connect to this network in order to access one or more network functions, such as communication with other network devices and/or internet access. One or more additional devices 140 may be provided which operates using a different communications protocol that may be detectable by the user device 100. An example of such a device is an Internet of Things device, which may operate using other wireless protocols such as Zigbee^{®} which offers low-power wireless connectivity.

Before discussing the techniques of the present disclosure, some terminology will be introduced by discussing a conventional tracking and mapping process using images of an environment. This process provides an example of a mapping process that may be used in embodiments of the present disclosure; however it is also considered that any other mapping process for an environment may be considered appropriate; for instance, an acoustic mapping process could be used such that there is no need for a camera to be provided. Similarly, any other image and/or depth data may be used as the basis for a map generation method.

In a tracking and mapping process, images of a scene in three-dimensional space are captured from different viewpoints (different camera poses) using one or more image sensors. Feature points can be detected in the captured images of the scene using known image recognition techniques. For example, for an image comprising an object having several corner points, a corner detection algorithm such as FAST (Features from Accelerated Segment Test) can be used to extract feature points corresponding to the corners of one or more elements in the image, such as a corner of a chair or a corner of a wall. The feature points are thus identified in the plurality of captured images and are associated with one another in the sense that the image position of a particular three-dimensional point as captured in one image is associated with the image position of that three-dimensional point as captured in another image. The basis of a typical tracking and mapping system involves deriving, from this information on associated points in one image with points in another image, an internally consistent set of data defining the respective camera viewpoints and the three-dimensional positions of the points. In order for that set of data to be internally consistent, it should lead to a consistent set of three-dimensional positions, and in respect of a particular image, it should lead to a consistent relationship between the camera pose for that image and the expected (and actual) image positions of points as captured by that image.

To illustrate some of these concepts further, Figure 2 schematically illustrates an example of a set of detected feature points (labelled as numerals 200A ... 200F) obtained from two respective images captured with two different viewpoints F1, F2 for a scene. Each viewpoint comprises a camera position 210, 220 and a camera orientation 215, 225 relative to a local coordinate frame (illustrated schematically as three orthogonal axes in each case). Although, for practical reasons, Figure 2 is drawn in two dimensions, the detected feature points each represent a three-dimensional point.

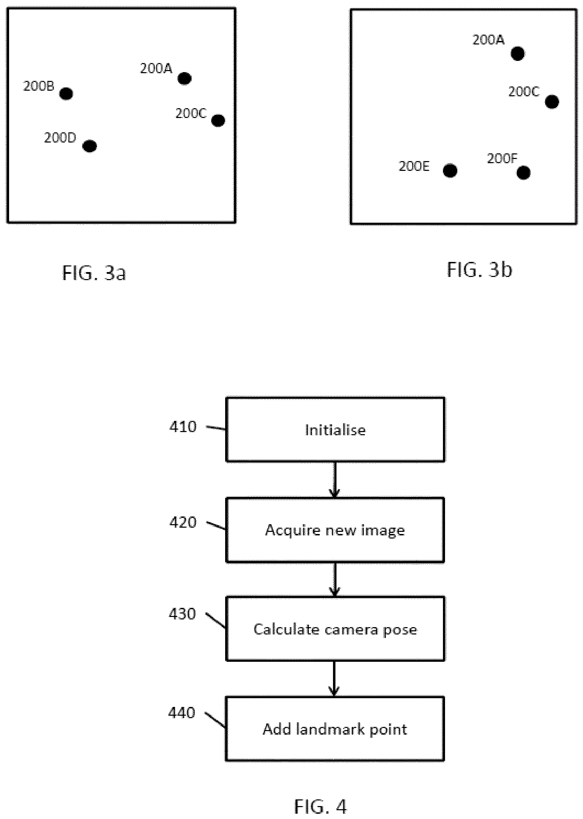

Figures 3a and 3b are schematic representations of images captured by the camera at positions F1 and F2. In each case, some of the points 200A ... 200F can be seen in the captured images. If the set of data discussed above is internally consistent, the actual image positions of these points will correspond to the image positions predicted from the camera pose and the three-dimensional positions derived for those points. Typically the images are captured by the same camera at different positions, but where multiple cameras capture overlapping views and have a known positional relationship to each other then such images can alternatively or in addition be used to the extent that the views overlap.

The camera may be associated with any device as appropriate for a given implementation; for instance, one or more cameras may be provided by the user device 100 of Figure 1 (such as using front and/or rear cameras of a mobile phone). Alternatively, or in addition, images may be captured by a separate mapping device which comprises a number of cameras appropriate for such a task. The device may be configured to move about the environment of its own accord, or may be moved manually by a user.

Figure 4 is a schematic flowchart giving an overview of a tracking and mapping process that can be performed on the basis of a set of detected feature points as shown in Figure 2. The example process starts from no advanced (a priori) knowledge of either the camera viewpoints or the spatial position of feature points to be captured by the camera images. Accordingly, a first stage is to initialise the system at a step 410. Initialisation will be discussed in more detail below, but typically involves detecting feature points captured for different viewpoints so that a same feature point is detected for two or more different viewpoints, in which each detected feature point corresponds to a landmark point for use in mapping the scene, and deriving a set of map data for the scene using each of the landmark points.

A loop operation then follows, comprising the steps of acquiring a new image (for example, at an image capture rate such as 15 images per second, 30 images per second, 60 images per second or the like) at a step 420, calculating a position and orientation of the viewpoint for the new image from the set of map data and the newly acquired image at a step 430 and, potentially, adding detected feature points from the newly acquired image as further landmark points for updating the map at a step 440. Note that although the step 440 is shown in this example as forming part of the basic loop of operation, the decision as to whether to add further landmark points is optional and could be separate from this basic loop.

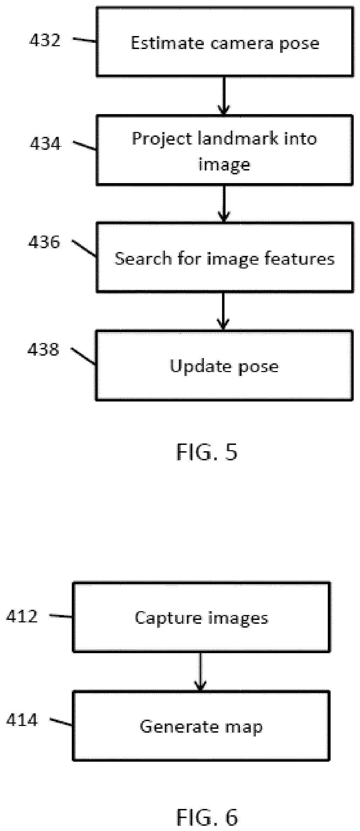

Figure 5 is a schematic flowchart of operations carried out as part of the step 430 of Figure 4. These operations are performed to derive a viewpoint position and orientation (also referred to as a camera pose) from a newly acquired image and the set of map data.

At a step 432, the system first estimates a prediction of a camera pose in respect of the newly acquired image. This initial estimation may be performed using a model. The model could be embodied as a position tracking filter such as a Kalman filter, so that a new camera pose is extrapolated from the recent history of changes in the camera pose. In another example, the model could alternatively or in addition make use of sensor data such as gyroscopic or accelerometer data indicating changes to the physical position and orientation in space of the device on which the camera is mounted (e.g. an HMD, head-mountable display device, comprising one or more inertial sensors). However, at a very basic level, the new camera pose could be estimated simply to be the same as the camera pose derived in respect of a preceding captured image.

At a step 434, the landmark points of the map data are projected into corresponding positions in the newly acquired image based on the initial estimate of the camera pose. This gives an image position for a landmark point of the map in the newly captured image (or a subset of the landmark points under consideration), where the image position for the landmark point corresponds to where the landmark point is expected to be seen in the newly captured image. At a step 436, the system searches the newly captured image for image features corresponding to the landmark points. To do this, a search can be carried out for image features which relate to or correlate with the landmark point. The search can be carried out at the exact predicted position, but also at a range of positions near to the predicted position. Finally, at a step 438 the estimated camera pose for that image is updated according to the actual detected positions of the landmarks in the captured image.

Figure 6 is a schematic flowchart of a basic initialisation technique (corresponding to the step 410 discussed above), comprising, at a step 412, capturing a plurality of images of a scene from different viewpoints and, at a step 414, generating a map using each of the feature points detected from the captured images as a respective landmark point. The camera may be configured to capture images at a predetermined frame rate, or in some cases image capture may be instructed by a user providing a user input at a respective time to capture an image. As such, feature points for a plurality of different viewpoints can be detected and a map can be generated comprising a plurality of landmark points, in which each landmark point included in the generated map corresponds to a respective detected feature point, and in which each landmark point included in the map is associated with three-dimensional position information and image information for the detected feature point. Known Structure from Motion (SfM) techniques may be used for creating such a map data set. Optionally, the image capturing device may comprise one or more inertial sensors such as a gyroscope, magnetometer and/or accelerometer for tracking changes in positon and/or orientation and information from one or more such sensors can also be used for creating the map data set. The above description provides an overview of a typically technique for generating a map for an environment using detected feature points.

In any event, the above is an example of a SLAM technique for mapping a real-world environment and tracking a camera viewpoint within it. However, any suitable SLAM implementation or any other technique for mapping a real-world environment may be considered.

As a part of the mapping process, or as a separate process, a detection of wireless signals is performed in the real-world environment. This may be performed by the mapping device, or by a different device. The detection of wireless signals can be performed using a corresponding receiver for the type of signal that is desired to be detected. Rather than being limited only to local or ad-hoc network detection, this process can also include the detection of larger networks such as mobile phone networks. In some embodiments, wireless signal strength information can be obtained (such as through a network coverage maps) or estimated (based upon known signal sources and information about the environment) rather than requiring explicit detection.

In some embodiments, this detection process may include only an identification of the wireless signals that are detected or the devices (such as wireless routers) associated with those signals. Wireless signals may include any signals as appropriate for a given embodiment - for instance, Wi-Fi^{®} networks, Bluetooth" signals, mobile phone networks, and any other wireless communication network. In some embodiments, detections of signal strength can be made as well as any other properties of a network as appropriate for a given network (such as number/identity of connected devices, security configuration, and available services provided by the network). The location of a wireless router or other device associated with a network may also be identified; this may be performed in dependence upon varying signal strength throughout the environment and/or image recognition techniques, for example.

Information about wireless signals may be used to generate a map layer or standalone map of the wireless signals - for instance, a map layer indicating the signal strength for one or more Wi-Fi^{®} networks at various locations in a real-world environment. Alternatively, or in addition, metadata may be generated for a map of a real-world environment which indicates which signals are detectable within that environment (or at one or more locations within that environment). Of course, any other suitable method for storing information about detected wireless signals may be considered appropriate rather than being limited to these examples.

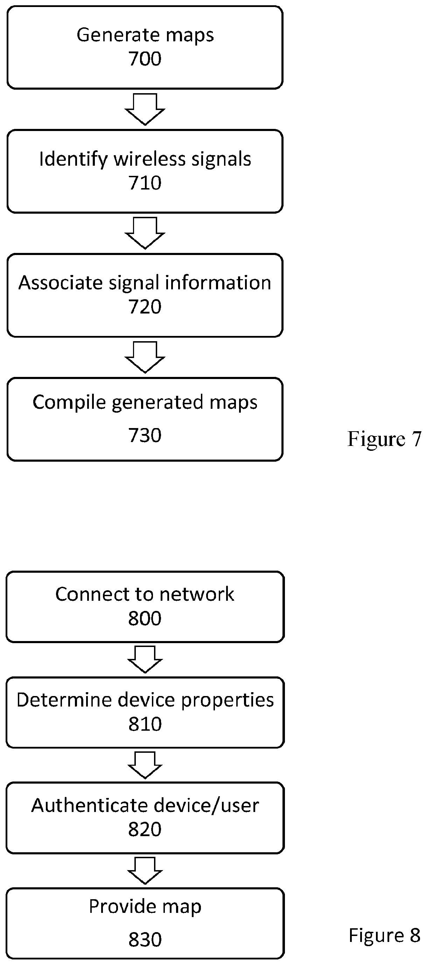

Figure 7 schematically illustrates a method for generating and managing maps of a plurality of real-world environments. This can enable the generation of a single, composite map encompassing a number of real-world environments, such as different rooms within the same building, or a large environment which can be treated as a plurality of environments due to its size (for instance, if it is large enough or has enough obstructions that multiple mapping processes is considered to be appropriate, such as a shopping centre or a large outdoor space).

A step 700 comprises generating a map of each of the plurality of real-world environments. This may be implemented in any manner suitable for a given environment; examples include performing SLAM or any other image-based mapping methods, as well as the use of other mapping techniques such as the use of depth sensors (such as LIDAR methods) or acoustic modelling. In some cases, it may be considered advantageous to use multiple mapping methods to generate information for an environment to increase the reliability of that data or otherwise enhance the map data. Information about each environment is obtained separately, such that individual maps are generated for each of the real-world environments.

In some embodiments this may include the use of sensors handled by a human user (such as a user manipulating a camera to image a room); alternatively, or in addition, sensors may be controllable to capture information about the entire environment. Examples of this may include cameras that are able to image a sufficient portion of the environment so as to generate an adequate map (including cameras or camera arrays that can image the entire environment), or sensors associated with actuators or controllable devices, such as a robot, that are able to be operated to successively obtain information about different parts of the environment.

The map generation process for each environment may comprise the use of measurements taken from a single position in the environment, while in others measurements may be gathered at a number of different locations within the environment. This may be determined in dependence upon any suitable factors - for instance, this may be based upon the type of mapping performed. Similarly, the environment itself may be a factor, as an environment which has a large number of objects may have a large number of occluded areas - and as such to generate a comprehensive map it may be necessary to obtain information from a number of different locations within the environment so as to reduce the number of areas having no map information due to occlusions.

In some embodiments the generated maps may comprise information about the objects or features represented by the maps. This may be information identifying them (such as determining that a door is a door, or a table is a table), and/or information relating to particular characteristics of these objects or features. This information may be generated based upon object recognition processes, user inputs, or a determination of the differences between multiple maps of the same environment captured at different times. This may be particularly useful in public spaces in which there is a greater scope for other people to modify features of the environment - for instance, consider a road in which the arrangement of parked cars may change frequently or a shopping centre in which an array of kiosks may be updated on a regular basis.

An example of such a characteristic is that of object permanence or another measure of how likely it is that a feature would change - this can inform a user or application as to how likely the map information (or a portion of that information) is to remain the same over the time. For instance, the information could identify a door in a map and the fact that it can open/close (and potentially a range of motion of the door). Similarly, a table could be identified as being movable. This may be useful both in determining how the environment can change during the user experience, and as an indicator of how accurate the map information is likely to be (and where it may need updating) due to changes since the map was generated. Parts of a map (particular regions, features, and/or object) may be assigned a persistence score as a way of conveying this information, with the score representing how 'fixed' (permanent) a particular region/feature/object is in the environment.

A step 710 comprises identifying one or more wireless signals at one or more locations in each of the plurality of real-world environments. This may be performed so as to determine the identity of the wireless signal, such as the SSID or other identifiers for a wireless network, as well as any other characteristics that may be considered to be useful in a particular implementation. For instance, in some embodiments it may be considered advantageous to also measure the signal strength, to identify the type of network (such as differentiating between a local network or mobile phone network), to identify connection information (such as whether the network is N/G/B/AC, a network frequency, or whether the network has security) or to determine any services associated with the network.

The identification of step 710 may be performed at a single point in time, offering a snapshot of the wireless signals detected at a given position in the environment. Alternatively, or in addition, the identification may be performed over a period of time to account for fluctuations in network conditions over time. A suitable period of time may be on the order of seconds, for example, such as five or ten seconds. This can enable the determination of average signal strength over time, for instance, as well as making it more likely that all networks are detected as a part of the identification process.

As noted above, the identification may be performed at multiple locations within an environment; this may be in a discrete or continuous manner. This can enable the generation of a map of wireless signal information for the environment, or at least more complete information about which wireless signals are able to be detected in a given environment.

The information generated by the step 710 may be stored in any suitable manner in dependence upon the implementation and the information that is gathered. For instance, in some cases a map may be generated indicating the wireless signals able to be identified at each of a plurality of locations - here, map does not require that information about the environment itself is known but only that information about wireless signals are associated with spatial information to indicate conditions at a plurality of locations which are able to be defined relative to one another. Alternatively, or in addition, metadata or another data structure may be used to list (such as in a look-up table) information about the signals that are detected at the one or more locations at which an identification is performed.

In some cases, based upon the detection of signal strength at multiple locations in an environment, it may be possible to triangulate the location of the origin of that signal, such as a wireless network node or the like. Information identifying the origin of a signal may be included in the signal information that is stored.

A step 720 comprises associating the identified signal information (that is, the information identified in step 710) with a map corresponding to the same real-world environment. This association may be performed in any manner suitable for the format of the identified signal information, or for the intended use of the maps. In some examples, this may include the provision of one or more map layers for the map of the corresponding real-world environment. Different layers may be provided for each of the signals or types of signals identified, for example, or a single layer could be used to represent information about each of the signals. Similarly, a data file may be associated with a map as metadata or the like. In some cases the signal information and the map may be stored together, while in others the data may be stored separately with a correspondence able to be identified such that they can be obtained together (such as both comprising a descriptor of the real-world environment to which they correspond).

A step 730 comprises compiling the respective generated maps into a single map, wherein the respective generated maps are arranged in dependence upon the wireless signals identified in each of the corresponding real-world environments. This may be performed using any information from the maps and/or identified signals; a user may also be able to provide further information (or it may be otherwise obtainable) to assist with the process - such as identifying network routers (and in some cases, a corresponding network) in a map. In some cases, the maps are not all contiguous in the composite map due to unmapped hallways or stairs and the like; in such cases, these gaps between the generated maps may be automatically filled with random, predetermined, and/or predicted maps of the areas between the generated maps.

In a first example, a comparison is performed of the detectable signals from each environment. Based upon this information, a relative positioning of the real-world environments can be performed even without information about the origin of the identified signals. This is because a comparison of the detected signals (and their strengths, if identified) for each environment places constraints upon their relative location as only particular arrangements of those environments would be logically consistent with the respective detections of wireless signals.

In a second example, the same process can be performed but with information about the origin of the wireless signals. This can enable a more reliable arrangement of the real-world environments as their locations can be compared to shared reference points (that is, the origins of the wireless signals as detected for each environment). While there may be discrepancies in the detected locations of the origins, for instance due to different signal transmissibility on respective transmission paths, these are likely to be close enough to enable the generation of an accurate composite map.

In a third example, information is available about the wireless signals at two or more locations within each of the real-world environments. In such an example, a more precise compilation is able to be performed, due to higher resolution data being available. This can also include determining relative orientations of the environments and the like, based upon the identified signal information.

The compilation of the respective maps may also utilise other information to assist in arranging the plurality of maps. For instance, doors may be recognised in the maps so as to assist with determining the correct relative orientation of the maps (as the same door would be identified in each of the respective maps of adjoining rooms). Similarly, the composite map may be updated after creation based upon further information - for instance, users may be tracked moving between rooms to determine the location of hallways or stairs.

The output of this method is a composite map comprising an arrangement of the maps generated for each of the real-world environments for which a mapping process according to step 700 has been performed. This can enable the generation of a map of a user's house, comprising maps of each of the rooms, for example or the mapping of any other environment which comprises a number of different areas. Rather than requiring that the different environments are different rooms, it may be the case that the environments are considered distinct due to their relative locations - for instance, a map of an outside area may be generated in this manner based upon maps generated for each of a number of different parts of the outside area that are not each able to be mapped from the same location. The composite map may comprise the wireless signal information, or this may be omitted (or otherwise separable) from the composite maps as appropriate for a given implementation. For instance, if it is anticipated that the wireless signal information would not be utilised by a user then it would be more efficient to transmit only the spatial map information and not the wireless signal information.

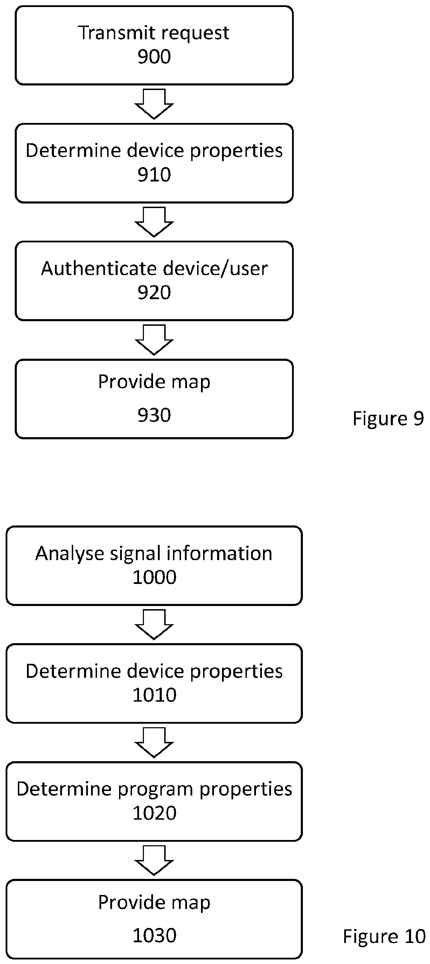

Embodiments of the present disclosure may be concerned with the use of generated composite maps in dependence upon the wireless signal information. Figures 8 and 9 schematically illustrate exemplary methods of distributing the generated composite maps. Either of these methods may be combined with the method of Figure 7 freely, and features described below with reference to one of these methods may be considered to be combinable with the other of these methods as appropriate for a given implementation. However in some cases it may not be necessary to perform a process according to Figures 8 or 9 in order to obtain a map, such as in the case in which it is the user device that generates the map.

Figure 8 schematically illustrates a method by which a wireless network is operable to distribute one or more maps which identify that network as being the source of one or more of the detected wireless signals. This may be particularly useful in environments in which the map information is stored locally, such as at a computing device or network-attached storage.

A step 800 comprises connecting to, or otherwise communicating with, the wireless network with a user device, such as a computer, games console, mobile device, or HMD. In some cases this may comprise a full connection in which a user device is authenticated (such as by providing a passcode) while in others a more limited connection or communication is used in which functionality is limited due to security requirements not being complied with. For instance, a wireless network could be configured to restrict access to other devices on the network when not fully connected, but to still provide map information to user devices.

A step 810 is an optional step which comprises determining one or more properties of the user device. This can include a brand, a type of device (such as HMD or mobile phone), information about device capabilities (such as processing power or functionality), and available storage space. The determined properties can be used to determine a portion of a map or other properties of a map that is to be provided to that device. For instance, different functions may require different map resolutions or different network information to be included. It may also be possible to infer from device properties how likely a user is to move between rooms (for instance, a wireless device is more likely to move between rooms than a wired device), and as such the amount of map information can be tailored accordingly so as to reduce the amount of unnecessary map information that is transmitted and subsequently stored.

A step 820 comprises an optional step of authenticating the user device or user of that device, or otherwise determining permissions for obtaining map information. This may be performed using a look-up table or the like which indicates a number of authorised devices (such as those belonging to the owner of the real-world environment and devices belonging to trusted other users) or users who are allowed to obtain map information. Alternatively, or in addition, security such as a passcode may be used to differentiate between those who are allowed to obtain the map information and those who are not. In some cases, the authorisation may be based upon a user's profile on a network or other system, such as a gamer profile.

A step 830 comprises providing one or more maps to the user device, the maps identifying the wireless network as being the source of one or more of the detected wireless signals. These maps may be the composite maps generated using a method such as that described with reference to Figure 7, or a portion of those maps. In some embodiments the map may comprise network information, while in others it may be omitted if it is not required.

Methods according to Figure 8 may be of particular use when distributing maps to a user device that is able to connect to (or otherwise communicate with) a wireless network that is associated with a location represented by the map. For instance, if a user of a device goes to a friend's house then they may be able to obtain detailed map information for the house from the friend's wireless network router. This means that the user is not required to generate their own mapping information for the environment, which can be both more efficient and assist in protecting the privacy of the friend (as this may mean that there is no need for the user to capture images of rooms in the house, for example).

Figure 9 schematically illustrates a method by which a user device is operable to obtain one or more maps associated with a particular wireless signal. This may be particularly useful in environments in which the map information is stored remotely, such as at a server that is not directly associated with the wireless signal.

A step 900 comprises transmitting a request to a server from a user device (such as a computer, games console, mobile device, or HMD), the request comprising information identifying one or more wireless signals. For instance, a request may identify the SSID or other identifying information for a local network. This request may be transmitted using any suitable communication method, such as an internet connection that enables communication with the server. The request may further comprise one or more indications of user preferences relating to map information, such as which portions of a map are desired or which features are of interest.

A step 910 is an optional step which comprises determining one or more properties of the user device. This may be performed in the same manner as step 810 described above, with the aim of identifying capabilities and/or ownership of the device (for example).

A step 920 comprises an optional step of authenticating the user device or user of that device, or otherwise determining permissions for obtaining map information. This may be performed in the same manner as step 810 described above, and is performed where regulation of the distribution of map information is preferred.

A step 930 comprises providing one or more maps to the user device, the provided maps being associated with one or more of the wireless signals identified in the request. These one or more maps, or map portions, may be downloaded by the user device via an internet connection (for example).

Methods according to Figure 9 may be of particular use when distributing maps to a user device in the case in which the maps are not stored by local devices in the environment. Examples of suitable embodiments may include those in which map information is being provided for a public space such as a shopping centre.

Figure 10 schematically illustrates a method by which a user or device can be instructed to cause the user device to be moved. For instance, an instruction or suggestion may be provided to a user of the device, and/or one or more actuators (or the like) may be controlled directly so as to cause motion of the user device. This method may be performed in conjunction with any or each of the methods of Figures 7-9; as such these methods should be considered to be freely combinable.

A step 1000 comprises analysing map information indicating one or more properties of wireless signals in the real-world environment corresponding to the map. This may include an identification of the source of one or more of the wireless signals, for instance, or an identification (or estimation) of the signal strength at a plurality of locations within the real-world environment. This is based upon the wireless signal information that is associated with the map, although it is recognised that this information may be processed to obtain the desired information (such as by interpolating signal strength for different locations).

A step 1010 comprises identifying one or more characteristics of the user device. This may include a determination of the type of device, for example, and/or a determination of the network requirements of the device. For instance, some devices may accept a lower signal strength than other devices as a higher latency/slower speed or the like that may result from a poor signal strength may have a lower impact on the operation of that device.

A step 1020 comprises identifying one or more characteristics of a program being executed by the user device. Similarly to step 1010, this is performed to identify network requirements imposed by the operation of the user device. For instance, a device which is running an email client will likely have lower network requirements than a device running an online game or a video calling application and as such a lower signal strength can be tolerated.

A step 1030 comprises generating an instruction or suggestion in dependence upon the map information and one or more characteristics of the user device or a program being executed by that device. In the case that characteristics of only one of these is used in step 1030, the step corresponding to identification of unused characteristics may be omitted from this process.

The output of step 1030 may be a notification to the user that indicates a location with a better signal strength, for example, or instructions for controlling a device to move itself to a location with an improved signal strength.

Such a method makes use of the wireless signal information acquired as a part of the map generation process so as to enable an improved user experience when using a device that communicates using one or more of the identified wireless signals.

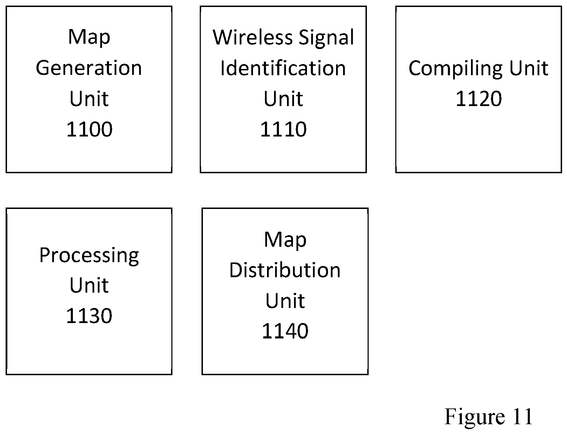

Figure 11 schematically illustrates a system for performing a map generation process and using the generated maps; in other words, this may be considered to be an exemplary system for generating and managing maps of a plurality of real-world environments. The system comprises a map generation unit 1100, a wireless signal identification unit 1110, a compiling unit 1120, a processing unit 1130, and a map distribution unit 1140.

These functional units may be distributed amongst any number of devices, including sensor devices (such as a mapping device comprising a number of sensors), user devices (such as games consoles and HMDs), wireless access points (such as wireless network routers), and/or servers. For instance, the map generation unit 1100 and wireless signal identification unit 1110 may be implemented at a mapping device with the compiling unit 1120 being implemented by an associated computer or games console. The processing unit 1130 may have its functionality implemented by a processor located in a user device such as a mobile phone, for example, with the map distribution unit 1140 being associated with a wireless access point or a remote server that is accessed via an internet connection.

The map generation unit 1100 is operable to generate a map of each of the plurality of real-world environments. The map generation unit 1100 may be operable to use image, depth, and/or acoustic information to generate maps; any other method for obtaining information about the real-world environment may also be considered appropriate. In some embodiments, this information may be used by the map generation unit 1100 to perform a SLAM process in order to generate map information.

In some embodiments the map generation unit 1100 is operable to include one or more object identifiers in generated maps. These may be used to identify objects of significance in the environment, such as the location of a wireless access point or processing device; the determination of what constitutes a significant object may be performed in dependence upon the environment and the purpose for which the map is to be used. In some embodiments, the map generation unit 1100 is operable to include information identifying one or more safe-play areas in generated maps - information about a safe-play area may be generated based upon the maps themselves (for instance, by identifying empty spaces with at least a threshold size) or based upon information provided to the map generation unit 1100 (such as from a games console that holds this information).

The wireless signal identification unit 1110 is operable to identify one or more wireless signals at one or more locations in each of the plurality of real-world environments, and to associate the identified signal information with a map corresponding to the same real-world environment. These signals may be detected using a corresponding wireless signal antennae or other receiver at the mapping device or a separate device for capturing wireless signal information. One or more of the wireless signals may corresponds to a local area or ad-hoc wireless network, for example, or a mobile phone network.

The compiling unit 1120 is operable to compile the respective generated maps into a composite map, wherein the respective generated maps are arranged in dependence upon the wireless signals identified in each of the corresponding real-world environments. In some embodiments the compiling unit 1120 is operable to generate one or more map portions to link the generated maps in the composite map, although it is considered that in some cases having non-continuous map portions may be allowable.

The processing unit 1130 may represent processors implemented as a part of one or more devices in the system as appropriate for the processing being performed. The processing unit 1130 is operable to generate a request, comprising information identifying one or more wireless signals detected by a user device, to obtain a composite map. This request may be generated by the user device, for example, or may be generated by another device on behalf of the user device based upon information received from the user device indicating detected wireless signals. The processing unit 1130 may be operable to generate one or more commands in dependence upon the obtained composite map, wherein the commands cause the user device to be moved to a location in the real-world environment having a higher signal strength for one or more of the identified wireless signals; this may be performed in accordance with the method of Figure 10, for example.

The map distribution unit 1140 is operable to distribute the composite map to the user device in response to the request, wherein the distributed map is associated with identified signal information identifying at least one of the one or more detected wireless signals. In some embodiments the map distribution unit 1140 is operable to distribute a portion of the composite map in dependence upon one or more characteristics of the user device and/or a program being executed by the user device. The map distribution unit 1140 may be located at a remote server and/or a device associated with one or more of the detected wireless signals. This may be performed in accordance with the methods discussed with reference to Figures 8 and/or 9, for example.

The arrangement of Figure 11 is an example of a processor (for example, a GPU and/or CPU located in a games console or any other computing device) that is operable to generate and manage maps of a plurality of real-world environments, and in particular is operable to:
generate a map of each of the plurality of real-world environments;
identify one or more wireless signals at one or more locations in each of the plurality of real-world environments;
associate the identified signal information with a map corresponding to the same real-world environment; and
compile the respective generated maps into a composite map, wherein the respective generated maps are arranged in dependence upon the wireless signals identified in each of the corresponding real-world environments.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for generating and managing maps of a plurality of real-world environments, the system comprising:
a map generation unit operable to generate a map of each of the plurality of real-world environments;
a wireless signal identification unit operable to identify one or more wireless signals at one or more locations in each of the plurality of real-world environments, and to associate the identified signal information with a map corresponding to the same real-world environment; and
a compiling unit operable to compile the respective generated maps into a composite map, wherein the respective generated maps are arranged in dependence upon the identification of common wireless signals between each of the corresponding real-world environments.

2. A system according to claim 1, wherein the map generation unit is operable to use image, depth, and/or acoustic information to generate maps.

3. A system according to any preceding claim, wherein the map generation unit is operable to include one or more object identifiers in generated maps.

4. A system according to claim 3, wherein the map generation unit is operable to identify one or more wireless access points in generated maps.

5. A system according to any preceding claim, wherein the map generation unit is operable to include information identifying one or more safe-play areas in generated maps.

6. A system according to any preceding claim, wherein the map generation unit is operable to perform a SLAM process.

7. A system according to any preceding claim, comprising:
a processing unit operable to generate a request, comprising information identifying one or more wireless signals detected by a user device, to obtain a composite map; and
a map distribution unit operable to distribute the composite map to the user device in response to the request, wherein the distributed map is associated with identified signal information identifying at least one of the one or more detected wireless signals.

8. A system according to claim 7, wherein the map distribution unit is operable to distribute a portion of the composite map in dependence upon one or more characteristics of the user device and/or a program being executed by the user device.

9. A system according to claims 7 and/or 8, wherein the map distribution unit is located at a remote server and/or a device associated with one or more of the detected wireless signals.

10. A system according to any of claims 7-9, wherein the processing unit is operable to generate one or more commands in dependence upon the obtained composite map, wherein the commands cause the user device to be moved to a location in the real-world environment having a higher signal strength for one or more of the identified wireless signals.

11. A system according to any preceding claim, wherein the compiling unit is operable to generate one or more map portions to link the generated maps in the composite map.

12. A system according to any preceding claim, wherein one or more of the wireless signals corresponds to a local area or ad-hoc wireless network.

13. A method for generating and managing maps of a plurality of real-world environments, the method comprising:
generating a map of each of the plurality of real-world environments;
identifying one or more wireless signals at one or more locations in each of the plurality of real-world environments;
associating the identified signal information with a map corresponding to the same real-world environment; and
compiling the respective generated maps into a single map, wherein the respective generated maps are arranged in dependence upon the identification of common wireless signals between each of the corresponding real-world environments.

14. Computer software which, when executed by a computer, causes the computer to carry out the method of claim 13.

15. A non-transitory machine-readable storage medium which stores computer software according to claim 14.
